# EUROPEAN PATENT SPECIFICATION

(11) **EP 1 964 755 B1**
(45) Date of publication and mention of the grant of the patent: **17.02.2010**
(21) Application number: 08101825.1
(22) Date of filing: 21.02.2008
(51) Int. Cl.: B62D 25/16

(54) **Shield strut module**
Schildstrebenmodul
Module de jambe de force de protection

(30) Priority: 01.03.2007 SE 0700507
(43) Date of publication of application: 03.09.2008
(73) Proprietor: Scania CV AB, 151 87 Södertälje (SE)
(72) Inventor: Tjeder, Caroline, 151 46 Södertälje (SE); Jönsson, Magnus, 151 48 Södertälje (SE); Börjesson, Jan, 432 36 Varberg (SE); Larsson, Anders, 149 21 Nynäshamn (SE)

(56) References cited:
- DE-A1- 19 810 252
- FR-A- 2 729 115
- US-A- 4 712 805

## Description

### Technical field

The present invention relates to a shield strut module for vehicles.

### Background

Many heavy vehicles are provided with shields to prevent stones and the like from being projected by the vehicle's tyres towards following or oncoming traffic or towards the vehicle's superstructure. These shields are usually held in position by shield struts fastened to the shield and to the vehicle.

A problem with such shields is that they vibrate when the vehicle is in motion both on even and, still more, on uneven running surfaces, which may lead to fatigue fracture of shield struts after a lengthy period of use, owing to the great accelerations to which they are subject. To reduce this problem, shield struts may be provided with damping devices of various kinds.

An example of a damped shield for a vehicle is referred to in US-A-4 712 805, in which a shield is fastened to a vehicle via a shield strut.

### Brief description of the invention

The problem that shield struts may be subject to fatigue fracture after a lengthy period of use, owing to the great accelerations to which they are subject, is solved according to the invention by a strut module according to claim 1.

### Brief description of the drawings

The invention is described below in more detail with reference to the attached drawings, in which:
Figure 1 depicts schematically a shield strut module according to a first embodiment of the invention,
Figure 2 depicts schematically the shield strut module according to a first embodiment of the invention fastened to a vehicle frame via a frame bracket, and
Figure 3 depicts schematically an exploded view of one end of a shield strut module according to a first embodiment of the invention.

### Description of preferred embodiments

Similar items in the various diagrams are designated by the same reference notations.

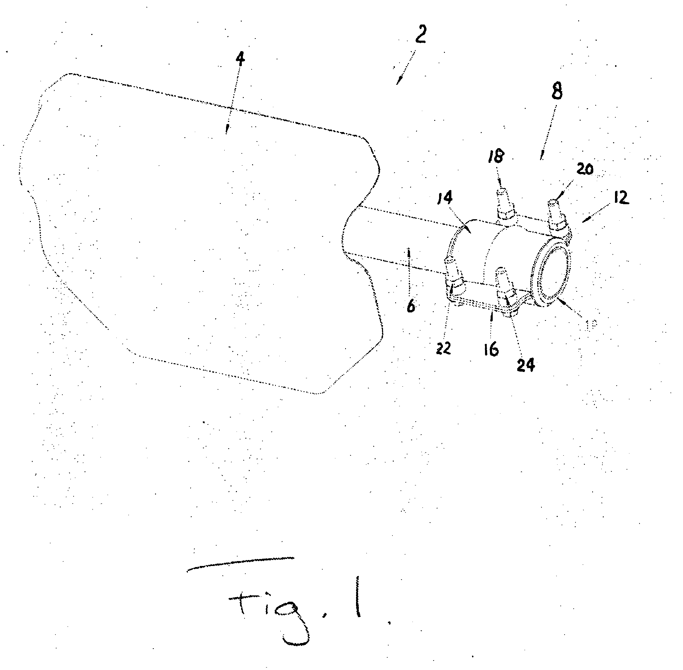

Figure 1 depicts schematically a shield strut module according to a first embodiment of the invention, which strut module 2 comprises a shield bracket 4, a shield strut 6 and a damping module 8. The damping module 8 comprises in a first embodiment at least one rubber bushing 10 and a housing 12. The housing 12 comprises in a first embodiment two housing elements 14, 16 preferably joined together by threaded connections 18, 20, 22, 24. The shield strut 6 is preferably made of steel, the rubber bushing 10 is preferably pressed on the shield strut 6, and the shield bracket 4 is preferably fastened to the shield strut 6 by welding. Alternatively, the shield strut 6 may be made of aluminium and the rubber bushing 10 may be permanently vulcanised to the shield strut 6. If the shield strut 6 is made of painted steel, permanently vulcanising the rubber bushing 10 to the shield strut 6 may be problematical, since poor adhesion between rubber and paint may lead to problems. The shield (not depicted) is usually made of plastic or sheetmetal and may be fastened to the shield bracket 4 by, for example, a threaded connection. The shield strut 6 is depicted as a straight tube in the drawings but may also be curved to adapt the shield strut 6 to available fastening points on different vehicle frames and shields. The rubber bushing 10 may alternatively be vulcanised permanently to the housing 12, in which case the rubber bushing 10 is preferably divided into a plurality of elements which each fit to their respective housing elements 14, 16.

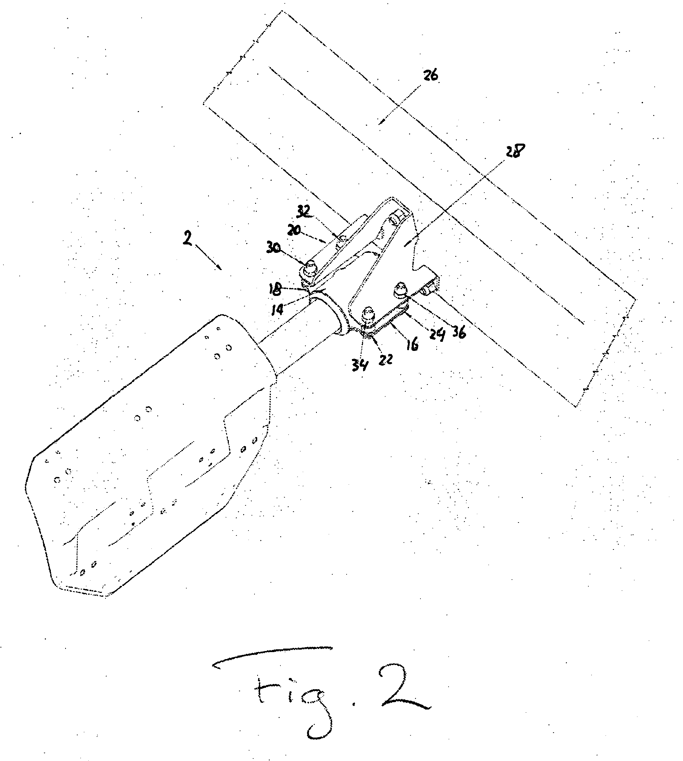

Figure 2 depicts schematically the shield strut module 2 according to a first embodiment of the invention fastened to a vehicle frame 26 via a frame bracket 28, which is separate from the strut module 2, and threaded connections 30, 32, 34, 36 which preferably utilise parts of the threaded connections 18, 20, 22, 24 which hold the damping module 8 firmly to the shield strut 6, i.e. by using portions of the threaded connections 18, 20, 22, 24 which hold together the two housing elements 14, 16. The configuration of the frame bracket 28 may vary depending on the provision of fastening points on the vehicle frame 26. The strut module may alternatively be fastened directly to the vehicle frame 26 if there are suitable fastening points on the vehicle frame 26.

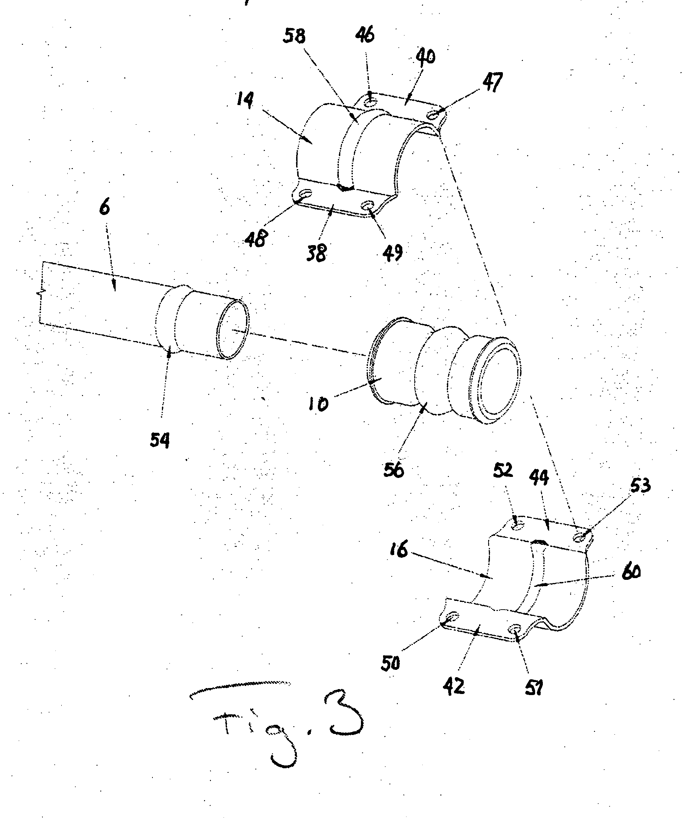

Figure 3 depicts schematically an exploded view of one end of a shield strut module according to a first embodiment of the invention. As illustrated in the diagram, a rubber bushing 10 is adapted to being drawn onto one end of the shield strut 6, after which two housing elements 14, 16 are adapted to being fitted to the outside of the rubber bushing 10. The housing elements 14, 16 are provided with protrusions 38, 40, 42, 44, e.g. flanges, with holes 46, 47, 48, 49, 50, 51, 52, 53 through which threaded connections are adapted to being fitted for fixing the damping module 8 to the shield strut 6 and for pressing the rubber bushing 10 against the shield strut 6. The shield strut is provided, at its one end, with at least one radial protrusion 54 adapted to engaging in at least one corresponding recess 56 in the rubber bushing 10 in order further to fix the rubber bushing 10 to the shield strut 6. The housing elements 14, 16 may also preferably be provided with corresponding recesses 58, 60, i.e. at least one housing element 14, 16 may be provided with a recess 58, 60 corresponding to the recess 56 in the rubber bushing 10 in order further to fix the rubber bushing 10 to the shield strut 6.

### The shield strut module 2 is preferably assembled as follows:

First, the strut module 2 is fitted together to form a unit by a shield bracket 4 being fastened, preferably by welding, to one end of the shield strut 6, and a damping module 8 being fastened to the other end of the shield strut 6. The damping module 8 is preferably fitted to the shield strut 6 by the rubber bushing 10 being drawn onto the end of the shield strut 6, followed by the rubber bushing 10 being placed in a first housing element 14. Thereafter the second housing element 16 is placed on top of the first housing element 14, and the rubber bushing 10, which is fitted on the shield strut 6, and the two housing elements 14, 16 are fitted together by threaded connections 18, 20, 22, 24.
Thereafter, the shield strut module 2, which will now be a single unit, is fitted firmly to the vehicle frame 26, preferably by the damping module 8 being fitted firmly to a frame bracket 28 which is itself fitted to the vehicle frame 26, preferably by a threaded connection. The frame bracket 28 is preferably fitted to the vehicle frame 26 before the strut module 2 is fitted to the frame bracket 28. This affords the advantage that a single type of shield strut module 2 can be fitted to any desired vehicle because of the frame bracket 28 being suited to the shape of the respective frame and the possible fastening points available therein.

The invention thus relates to a shield strut module for a vehicle, which strut module 2 comprises a shield strut 6, a damping module 8 and a housing 12, the strut module 2 further comprising a shield bracket 4, the damping module 8 comprising at least one rubber bushing 10, and the housing 12 of the damping module 8 comprising at least two housing elements 14, 16.

The invention also relates to a method for assembling a shield strut module for a vehicle.

## Claims

1. A shield strut module for a vehicle, which strut module (2) comprises a shield strut (6), a damping module (8) and a shield bracket (4) fastened at one end of the shield strut (6), whereby means (18, 20, 22, 24) are provided for fastening the damping module (8) at the other end of the shield strut (6), and whereby the damping module (8) comprises at least one rubber bushing (10) and a housing (12) comprising at least two housing elements (14, 16), **characterised in that** the shield strut (6) is provided, at its one end, with at least one radial protrusion (54) adapted to engaging in at least one corresponding recess (56) in the rubber bushing (10) for further fixing of the rubber bushing (10) to the shield strut (6).

2. A shield strut module for a vehicle according to claim 1, **characterised in that** the damping module (8) is fitted to the shield strut (6) by the rubber bushing (10) being drawn onto the end of the shield strut (6), and the housing elements (14, 16) are fitted together around the rubber bushing (10).

3. A shield strut module for a vehicle according to claim 1, **characterised in that** at least one housing element (14, 16) is provided with a recess (58, 60) corresponding to the recess (56) in the rubber bushing (10) for further fixing of the rubber bushing (10) to the shield strut (6).

4. A shield strut module for a vehicle according to any one of the foregoing claims, **characterised in that** the housing elements (14, 16) are provided with protrusions (38, 40, 42, 44) with holes (46, 47, 48, 49, 50, 51, 52, 53) through which means (18, 20, 22, 24) are adapted to being fitted in order to fix the damping module (8) to the shield strut (6) and press the rubber bushing (10) against the shield strut (6).

5. A shield strut module for a vehicle according to claim 4, **characterised in that** means (18, 20, 22, 24) for fitting the damping module (8) together with the shield strut (6) comprise threaded connections (18, 20, 22, 24).

6. A shield strut module for a vehicle according to any one of the foregoing claims, **characterised in that** a means (28) is provided for fitting the strut module (2) firmly to a vehicle frame (26).

7. A shield strut module for a vehicle according to claim 5, **characterised in that** the means (28) for fastening the strut module (2) firmly to a vehicle frame (26) comprises a frame bracket (28) which is separate from the strut module (2).

8. A shield strut module for a vehicle according to claim 7, **characterised in that** the damping module (8) is fitted to the frame bracket (28) by use of portions of the means (18, 20, 22, 24) provided for fastening the damping module (8) to the shield strut 6.

9. A shield strut module for a vehicle according to any one of the foregoing claims, **characterised in that** the rubber bushing (10) is pressed and/or permanently vulcanised on the shield strut (6).

10. A shield strut module for a vehicle according to any one of the foregoing claims, **characterised in that** the shield bracket (4) is fastened to the shield strut (6) by welding.

## Patentansprüche

1. Schildstrebenmodul für ein Fahrzeug, welches Strebenmodul (2) eine Schildstrebe (6), ein Dämpfungsmodul (8) und eine Schildhalterung (4) umfasst, die an einem Ende der Schildstrebe (6) befestigt ist, wobei Mittel (18, 20, 22, 24) zur Befestigung des Dämpfungsmoduls (8) am anderen Ende der Schildstrebe (6) vorgesehen sind, und wobei das Dämpfungsmodul (8) mindestens eine Gummibuchse (10) und ein Gehäuse (12) umfasst, das mindestens zwei Gehäuseelemente (14, 16) umfasst,
**dadurch gekennzeichnet, dass** die Schildstrebe (6) an ihrem einen Ende mit mindestens einem radialen Vorsprung (54) versehen ist, welcher dafür ausgelegt ist, in mindestens eine korrespondierende Ausnehmung (56) in der Gummibuchse (10) zur weiteren Befestigung der Gummibuchse (10) an der Schildstrebe (6) einzugreifen.

2. Schildstrebenmodul für ein Fahrzeug nach Anspruch 1,
**dadurch gekennzeichnet, dass** das Dämpfungsmodul (8) an der Schildstrebe (6) durch die Gummibuchse (10) angebracht ist, die auf das Ende der Schildstrebe (6) aufgezogen ist, und die Gehäuseelemente (14, 16) um die Gummibuchse (10) herum zusammengefügt werden.

3. Schildstrebenmodul für ein Fahrzeug nach Anspruch 1,
**dadurch gekennzeichnet, dass** mindestens ein Gehäuseelement (14, 16) mit einer Ausnehmung (58, 60) versehen ist, die zu der Ausnehmung (56) in der Gummibuchse (10) für die weitere Befestigung der Gummibuchse (10) an der Schildstrebe (6) korrespondiert.

4. Schildstrebenmodul nach einem der vorhergehenden Ansprüche,
**dadurch gekennzeichnet, dass** die Gehäuseelemente (14, 16) mit Vorsprüngen (38, 40, 42, 44) mit Löchern (46, 47, 48, 49, 50, 51, 52, 53) versehen sind, durch welche Mittel (18, 20, 22, 24) einsetzbar sind, um das Dämpfungsmodul (8) an der Schildstrebe (6) zu befestigen und um die Gummibuchse (10) gegen die Schildstrebe (6) zu drücken.

5. Schildstrebenmodul für ein Fahrzeug nach Anspruch 4,
**dadurch gekennzeichnet, dass** Mittel (18, 20, 22, 24) zum Befestigen des Dämpfungsmoduls (8) zusammen mit der Schildstrebe (6) Gewindeverbindungen (18, 20, 22, 24) umfassen.

6. Schildstrebenmodul für ein Fahrzeug nach einem der vorhergehenden Ansprüche,
**dadurch gekennzeichnet, dass** ein Mittel (28) für das feste Anbringen des Strebenmoduls (2) an einem Fahrzeugrahmen (26) vorgesehen ist.

7. Schildstrebenmodul für ein Fahrzeug nach Anspruch 5,
**dadurch gekennzeichnet, dass** das Mittel (28) für die Befestigung des Strebenmoduls (2) an einem Fahrzeugrahmen (26) eine Rahmenhalterung (28) umfasst, welche von dem Strebenmodul (2) getrennt ausgebildet ist.

8. Schildstrebenmodul für ein Fahrzeug nach Anspruch 7,
**dadurch gekennzeichnet, dass** das Dämpfungsmodul (8) an der Rahmenhalterung (28) durch Benutzung von Teilen der Mittel (18, 20, 22, 24) angebracht ist, die zur Befestigung des Dämpfungsmoduls (8) an der Schildstrebe (6) vorgesehen sind.

9. Schildstrebenmodul für ein Fahrzeug nach einem der vorhergehenden Ansprüche,
**dadurch gekennzeichnet, dass** die Gummibuchse (10) an die Schildstrebe (6) gedrückt und/oder dauerhaft anvulkanisiert wird.

10. Schildstrebenmodul für ein Fahrzeug nach einem der vorhergehenden Ansprüche,
**dadurch gekennzeichnet, dass** die Schildhalterung (4) an der Schildstrebe (6) durch Schweißen befestigt ist.

## Revendications

1. Module de jambe de force de protection pour un véhicule, ledit module de jambe de force (2) comprenant une jambe de force de protection (6), un module d'amortissement (8) et un support de protection (4) fixé à une extrémité de la jambe de force de protection (6), moyennant quoi des moyens (18, 20, 22, 24) sont prévus pour attacher le module d'amortissement (8) à l'autre extrémité de la jambe de force de protection (6), et moyennant quoi le module d'amortissement (8) comprend au moins une douille en caoutchouc (10) et un boîtier (12) comprenant au moins deux éléments de boîtier (14, 16),
**caractérisé en ce que** la jambe de force de protection (6) est munie, au niveau d'une de ses extrémités, d'au moins une saillie radiale (54) conçue pour s'engager dans au moins un évidement correspondant (56) dans la douille en caoutchouc (10) pour mieux fixer la douille en caoutchouc (10) à la jambe de force de protection (6).

2. Module de jambe de force de protection pour un véhicule selon la revendication 1, **caractérisé en ce que** le module d'amortissement (8) est monté sur la jambe de force de protection (6) en tirant la douille en caoutchouc (10) sur l'extrémité de la jambe de force de protection (6), et **en ce que** les éléments de boîtier (14, 16) sont réunis autour de la douille en caoutchouc (10).

3. Module de jambe de force de protection pour un véhicule selon la revendication 1, **caractérisé en ce qu'**au moins un élément de boîtier (14, 16) est muni d'un évidement (58, 60) correspondant à l'évidement (56) présent dans la douille en caoutchouc (10) pour mieux fixer la douille en caoutchouc (10) à la jambe de force de protection (6).

4. Module de jambe de force de protection pour un véhicule selon l'une quelconque des revendications précédentes, **caractérisé en ce que** les éléments de boîtier (14, 16) sont munis de saillies (38, 40, 42, 44) comportant des orifices (46, 47, 48, 49, 50, 51, 52, 53) à travers lesquels des moyens (18, 20, 22, 24) sont conçus pour être introduits afin d'attacher le module d'amortissement (8) à la jambe de force de protection (6) et comprimer la douille en caoutchouc (10) contre la jambe de force de protection (6).

5. Module de jambe de force de protection pour un véhicule selon la revendication 4, **caractérisé en ce que** les moyens (18, 20, 22, 24) destinés à fixer le module d'amortissement (8) à la jambe de force de protection (6) sont constitués de raccords filetés (18, 20, 22, 24).

6. Module de jambe de force de protection pour un véhicule selon l'une quelconque des revendications précédentes, **caractérisé en ce qu'**un moyen (28) est prévu pour fixer le module de jambe de force (2) fermement à la carrosserie d'un véhicule (26).

7. Module de jambe de force de protection pour un véhicule selon la revendication 5, **caractérisé en ce que** le moyen (28) destiné à fixer le module de jambe de force (2) fermement à la carrosserie d'un véhicule (26) est constitué d'un support de carrosserie (28) distinct du module de jambe de force (2).

8. Module de jambe de force de protection pour un véhicule selon la revendication 7, **caractérisé en ce que** le module d'amortissement (8) est monté sur le support de carrosserie (28) à l'aide de parties des moyens (18, 20, 22, 24) prévus pour fixer le module d'amortissement (8) à la jambe de force de protection (6).

9. Module de jambe de force de protection pour un véhicule selon l'une quelconque des revendications précédentes, **caractérisé en ce que** la douille en caoutchouc (10) est comprimée et/ou vulcanisée de manière permanente sur la jambe de force de protection (6).

10. Module de jambe de force de protection pour un véhicule selon l'une quelconque des revendications précédentes, **caractérisé en ce que** le support de protection (4) est fixé à la jambe de force de protection (6) par soudage.
